# DEMANDE DE BREVET EUROPEEN

(11) **EP 2 610 824 A1**
(43) Date de publication de la demande: **03.07.2013**
(21) Numéro de dépôt: 12198857.0
(22) Date de dépôt: 21.12.2012
(51) Int. Cl.: G07F 7/08, G07F 7/02, G06Q 20/34, G06Q 20/32

(54) **Carte bancaire et procédé de réponse à une demande de transaction**

(30) Priorité: 30.12.2011 FR 1162591
(71) Demandeur: Oberthur Technologies, 92300 Levallois-Perret (FR)
(72) Inventeur: Gouessant, Hervé, 92726 Nanterre Cedex (FR)
(74) Mandataire: Lefevre-Groboillot, David André

(57) **Abrégé**

L'invention porte sur une carte bancaire (100) comportant une surface de présentation d'un pictogramme (120) codant au moins une information pour la réalisation d'une transaction.

## Description

### Domaine technique et art antérieur

L'invention s'inscrit dans le domaine des moyens de paiement sécurisé, comme par exemple les cartes bancaires, notamment les cartes bancaires à microcircuit.

Quand une transaction est effectuée en l'absence de terminal de paiement capable de lire par lui-même la carte, le détenteur de la carte doit saisir son numéro de carte sur un clavier, ainsi souvent que le numéro de sécurité de la carte et la date de validité de celle-ci. Cette opération est fastidieuse, et nécessite que l'utilisateur se concentre pour ne pas se tromper dans la saisie des numéros, qui sont longs.

On connait du document US2010/0008535 un dispositif électronique portable pour encaisser un paiement par carte bancaire de manière simple par lecture optique de la surface de la carte. Le dispositif peut être un téléphone portable et utilise la reconnaissance des caractères imprimés sur la carte à l'aide d'une caméra, d'une application de segmentation de la surface de la carte et de reconnaissance des caractères sur les différents segments.

On connait aussi du document WO01/58080 une carte de paiement munie d'un transducteur d'ultrasons communiquant avec tout dispositif muni d'un microphone et/ou de haut-parleurs, de manière à permettre une authentification sécurisée de la carte en l'absence d'un lecteur de carte. Dans le même document, un lecteur de code-barres est également muni d'un tel transducteur et communique de la même manière. Il est utilisé pour lire les codes-barres de marchandises dans un magasin et se connecter sur le site web du fabricant de marchandises, de manière à demander le bénéfice d'offres promotionnelles.

Ces différentes solutions présentent l'inconvénient, pour la première d'être faiblement sécurisée et difficile à utiliser pour un utilisateur pressé, qui est obligé de positionner finement sa carte devant la caméra, et, pour la seconde, de nécessiter un équipement spécifique. Il existe donc un besoin pour des solutions de paiement à distance sécurisées, faciles à utiliser et rapides. Pour cela il est proposé une carte selon la revendication 1 et un procédé selon la revendication 8.

### Résumé de l'invention

L'invention consiste en une carte bancaire comportant une surface de présentation d'un pictogramme codant au moins une information pour la réalisation d'une transaction. Cette information peut être un numéro de la carte, une date de validité de la carte, un nom ou prénom d'un titulaire de la carte, un identifiant de catégorie d'un émetteur de la carte, un identifiant d'un émetteur de la carte, un code de sécurité de la carte, ou un mot de passe à usage unique.

Selon une caractéristique particulière, le pictogramme est un code-barres, par exemple un code 2D, par exemple un code QR (« *Quick Response* »), ou également un pictogramme dynamique.

Selon une caractéristique avantageuse, la carte comprend un contrôleur pour générer un pictogramme à usage unique pour une transaction.

Selon diverses mises en oeuvre de l'invention, la surface est un écran LCD, ou une couche de matière synthétique imprimée ou gravée, incluse dans le corps de carte ou rapportée par exemple par collage.

Préférentiellement, le pictogramme code une adresse d'un serveur de transaction.

L'invention consiste aussi en un procédé de réponse à une demande de transaction comprenant des étapes consistant à recevoir une demande de transaction comprenant un pictogramme codant au moins une information pour la réalisation d'une transaction et une information complémentaire, extraire du pictogramme ladite information pour la réalisation d'une transaction, et en fonction de ladite information pour la réalisation d'une transaction et de l'information complémentaire, ainsi que de règles d'autorisation prédéfinies, émettre une autorisation ou un refus en réponse à la demande de transaction.

Le procédé est au moins partiellement mis en oeuvre par un serveur relié à un réseau de télécommunications étendu, ou par un terminal de paiement disposant d'un clavier et d'une caméra, ou encore par une entité électronique portable disposant d'un clavier et d'une caméra.

Selon un mode de réalisation, le procédé comprend de plus l'affichage sur un écran d'une boîte d'entrée pour une chaîne alphanumérique constituant l'information complémentaire.

Dans une variante, les règles d'autorisation prédéfinies comprennent une règle selon laquelle l'autorisation est donnée en fonction d'un résultat d'un test de comparaison appliqué à l'information complémentaire.

Selon un mode particulier, le procédé comprend l'envoi d'un message à destination d'une messagerie d'un titulaire d'un moyen de paiement comprenant un élément d'identification à usage unique, puis la réception d'un élément d'identification fourni par un demandeur de la demande de transaction et la comparaison de l'élément d'identification à usage unique et de l'élément d'identification fourni.

Le procédé peut aussi comprendre l'envoi d'au moins une caractéristique de la transaction à destination d'une messagerie d'un titulaire d'un moyen de paiement, puis la réception d'un bon de commande signé par un demandeur de la demande de transaction et l'authentification d'une signature du bon de commande.

Enfin, dans un mode de réalisation, ladite information pour la réalisation d'une transaction est un mot de passe à usage unique.

Ainsi, entre autres avantages cités à titre non limitatif, l'invention permet à moindre coût le déploiement d'une solution de paiement bancaire sans contact grâce aux équipements de saisie et de traitement d'information déjà largement déployés parmi les dispositifs utilisateurs ou équipements individuels du grand public (téléphones portables, ordinateurs, tablettes équipés de caméra).

Elle permet également de mettre en oeuvre une solution de paiement sécurisée, sans contact et rapide à l'utilisation lors d'une transaction bancaire. L'utilisateur évite l'étape fastidieuse de saisie des informations bancaires, ou des informations pour la réalisation d'une transaction. Il est également protégé contre une possible copie frauduleuse des informations bancaires présentes sous forme alphanumérique sur la carte et, qui, en l'absence d'un pictogramme les codant, doivent être recopiées lors de l'utilisation de celle-ci dans un commerce.

### Brève description des figures

La figure 1 présente une carte selon un mode de réalisation de l'invention.
La figure 2 présente un élément généré lors de l'utilisation d'une carte comme celle présentée en figure 1.
La figure 3 présente un agencement utilisé pour mettre en oeuvre un procédé selon un mode de réalisation, et coopérant avec un carte telle que présentée en figure 1.
La figure 4 présente un détail de la carte de la figure 1.
La figure 5 présente un aspect d'un procédé de réponse selon un mode de réalisation de l'invention
La figure 6 présente une entité électronique portable utilisée pour mettre en oeuvre un procédé selon un mode de réalisation.
La figure 7 présente le mode d'utilisation de l'invention par le titulaire de la carte de la figure 1.
Les figures 8 à 11 présentent des scénarios d'utilisation de l'invention.
La figure 12 présente une alternative au mode de réalisation présenté en figure 5.

### Exposé détaillé de l'invention

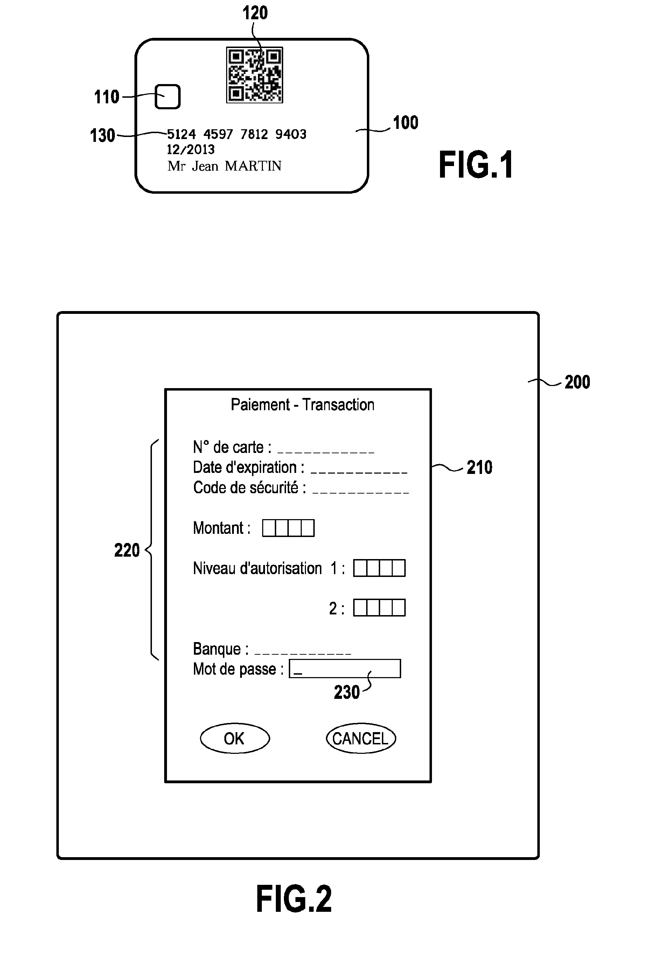

En **figure 1****,** on a représenté un carte bancaire 100 selon l'invention. Il s'agit d'une carte de dimensions 54 x 85,6 x 0.76 mm, mais d'autres dimensions peuvent être utilisées. Elle comprend un microcircuit 110 incluant un contrôleur et une mémoire dans un ensemble sécurisé à contacts affleurants.

La carte présente de plus, sur l'une de ses surfaces, ici la surface sur laquelle les contacts du microcircuit 110 affleurent, un code-barres 120 à deux dimensions, répondant à la norme QR (pour « *Quick Response* »). D'autres normes de code-barres à deux dimensions pourraient être utilisées, et un code-barres à une seule dimension est également une variante possible. Un pictogramme répondant à d'autres conventions de codage peut également être utilisé, pourvu qu'il permette de coder des informations pour une transaction.

Ce code-barres 120 est apposé sur la surface de la carte via un autocollant rapporté, une impression à l'encre sur la couche supérieure de la carte, une gravure de la couche supérieure par laser, ou un traitement laser d'une couche photosensible recouverte d'une couche de protection ou une autre action physique qui permet de former un dessin visible par un outil de lecture (par exemple une caméra) extérieur à la carte. Le code-barres 120 peut être apposé sur l'une quelconque des faces de la carte, par exemple sur la face avant à proximité d'éléments bancaires présentés sous forme alphanumérique, ou sur la face arrière à proximité d'éléments bancaires présentés sous la forme d'une bande magnétique.

La carte peut présenter, dans certains modes de réalisation, sous une forme alphanumérique et sur cette même surface ou sur son autre surface le numéro de la carte selon la norme ISO/IEV 7812. Il s'agit d'une succession de 16 chiffres (compris chacun entre 0 et 9), groupés par blocs de 4 chiffres. La carte peut présenter également le mois d'expiration et l'identité du titulaire, sous la forme prénom puis nom. Ces différents éléments constituent des éléments bancaires présentés sous forme alphanumérique 130.

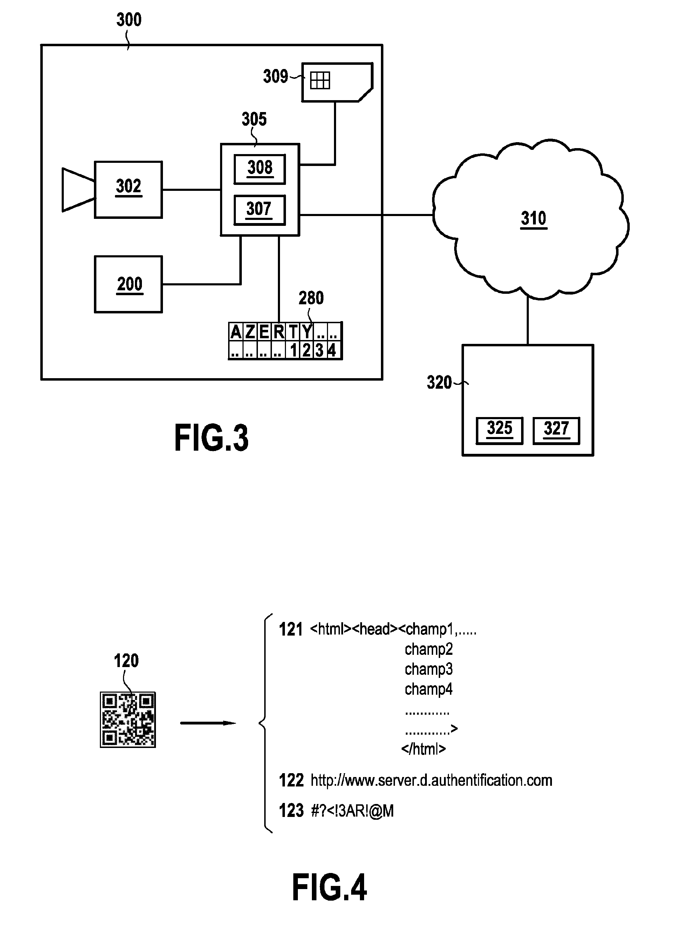

Le code-barres 120 peut être scanné par un lecteur de codes-barres relié à un logiciel adapté. Il code, dans un mode de réalisation, les informations présentées en **figure 4****.**

Tout d'abord le code-barres 120 code une commande html 121 (html signifie « *hypertext markup language* ») décrivant un cadre 210 représenté en figure 2, et des informations pré-remplies 220 à afficher dans le cadre 210. Les informations pré-remplies 220 peuvent être indiquées explicitement dans la commande html 121 ou, dans une alternative, seule une adresse mémoire où les retirer peut être indiquée dans la commande.

Le code-barres 120 peut coder aussi une adresse 122 identifiant un serveur 320 sur un réseau (représenté en figure 3). Il s'agit ici d'une adresse sur le réseau Internet, mais il pourrait aussi s'agir d'un lien téléphonique vers un service audio-téléphonique d'identification, ou un lien téléphonique vers un serveur de SMS.

Enfin, le code-barres 120 code aussi, dans certains modes de réalisation, des informations cryptées 123 utiles pour une opération de contrôle local, qui sera présentée plus loin.

La structure du cadre 210 est présentée en **figure 2****.** Le cadre 210 s'affiche sur un écran 200 d'un terminal servant pour une transaction. Il présente différentes informations 220 pré-remplies, telles que le numéro de la carte, sa date d'expiration, le code de sécurité de la carte (code en trois chiffres souvent apposé à l'arrière des cartes bancaires), ainsi que des montants correspondant à deux niveaux d'autorisation différents.

Le premier est un montant maximum de transaction ne nécessitant pas une opération de contrôle particulière (appelé niveau d'autorisation 1), et le deuxième est un niveau maximum au-delà duquel aucune transaction n'est autorisée avec la carte 100 (appelé niveau d'autorisation 2). Le cadre 210 présente aussi le nom de la banque émettrice de la carte 100 et une boîte de dialogue (boîte de saisie 230) pour l'entrée d'un mot de passe. Enfin, le cadre inclut deux boutons OK et CANCEL (ou « accord » et « annulation »).

Le montant de la transaction est soit à remplir par l'utilisateur dans une boite de dialogue, soit pré-rempli, comme cela est représenté sur la figure 2, car le code html du cadre 210 prévoit l'obtention de ce montant d'une mémoire du terminal servant pour la transaction.

En **figure 3****,** on a représenté un terminal de lecture 300, servant pour la transaction, et qui est relié par un réseau 310 à un serveur 320.

Le terminal de lecture 300 comprend un clavier 280 (ou du moins une interface homme-machine permettant de saisir une chaîne alphanumérique), une caméra 302 pour lire des codes-barres 2D, une carte SIM (pour « *Subscriber Identification Module* » 309) et une unité de contrôle 305, comprenant notamment un logiciel local 307 pour le traitement de demandes de transaction. Un compteur de transaction 308 est également présent, dans l'unité de contrôle 305 ou, dans une alternative, dans la carte SIM 309 pour une plus grande sécurité (alternative non représentée). Dans une variante, la carte SIM est incluse dans l'unité de contrôle 305. L'écran 200 fait partie du terminal de lecture de lecture 300.

Le serveur 320 peut comprendre dans une mémoire un mot de passe de référence 325 associé au titulaire de la carte 100 et une adresse de messagerie 327 associée au titulaire de la carte 100.

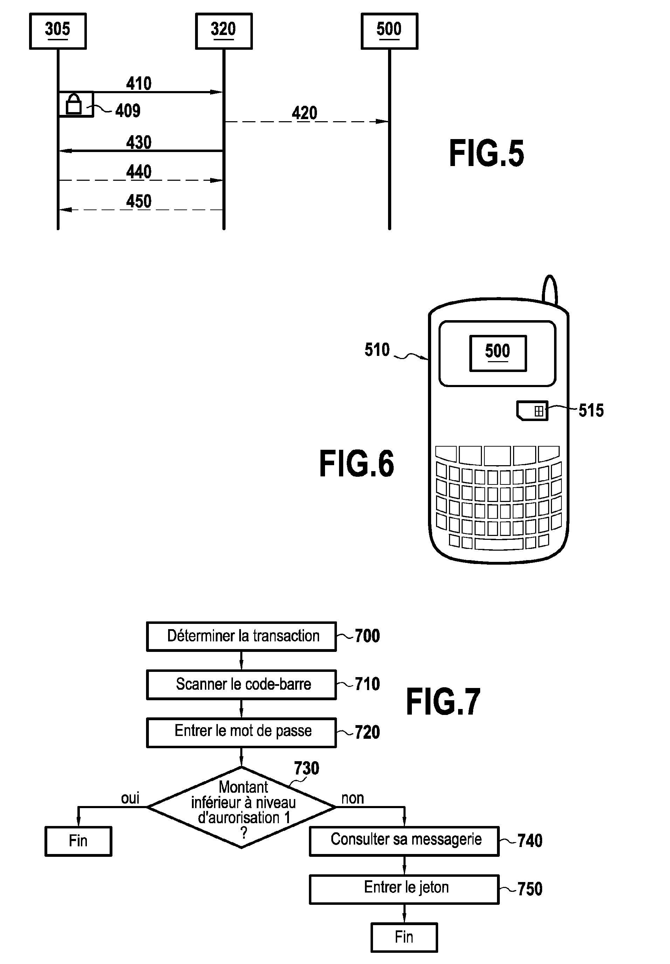

La **figure 5** présente les transferts de messages entre l'unité de contrôle 305 (ou la carte SIM 309), le serveur 320 et une messagerie 500 du titulaire de la carte 100. Cette messagerie est par exemple visualisée sur l'écran d'un téléphone portable 510 représenté en **figure 6****.** Il peut s'agir d'une messagerie de messages SMS ou MMS sur le réseau GSM, ou une messagerie de type email consultable sur un téléphone portable ou un ordinateur personnel relié à Internet, par une connexion filaire ou cellulaire.

L'unité de contrôle 305 effectue, à l'aide de moyens cryptographiques présents dans la carte SIM 309, à une étape de signature 409 d'une sollicitation 410 qui est envoyée au serveur 320, dont l'adresse 122 est connue par la lecture du code-barres 120. La sollicitation 410 comprend le montant de la transaction. La signature 409 est basée sur la valeur du compteur de transactions 308, qui est aussi envoyée de manière non cryptée dans la sollicitation.

Le serveur 320 vérifie si la signature de la sollicitation est authentique. Puis, si c'est le cas et si le montant de la transaction excède le montant maximum de transaction ne nécessitant pas une opération de contrôle particulière (niveau d'autorisation 1), le serveur 320 envoie un message 420 à la messagerie du titulaire de la carte 100 (dont l'adresse 327 est connue du serveur 320), demandant une confirmation et comprenant un jeton, qui peut être codé. Le jeton est décodé si nécessaire par la carte à microcircuit 515 (carte SIM) du terminal mobile 510, et affiché sur l'écran de celui-ci. Il peut être constitué d'une chaîne alphanumérique.

L'unité de contrôle 305 est de plus prévenue de l'envoi d'un jeton par le serveur 320 au cours d'une étape 430 constituant une première réponse du serveur. Le titulaire de la messagerie est alors en mesure de soumettre le jeton dans l'unité de contrôle 305, par exemple via le clavier 280. Le jeton soumis est alors transmis par l'unité de contrôle 305 au serveur 320, au cours d'une étape 440. Si le serveur 320 constate que ce jeton soumis est identique à celui précédemment transmis à la messagerie 500, il valide la transaction et en informe l'unité de contrôle 305 au cours d'une étape 450 constituant une deuxième réponse du serveur.

Si la transaction n'excède pas le montant maximum de transaction ne nécessitant pas une opération de contrôle particulière (niveau d'autorisation 1), il est simplement procédé à une étape de réponse 430 du serveur à l'unité de contrôle 305, indiquant que la transaction a été traitée.

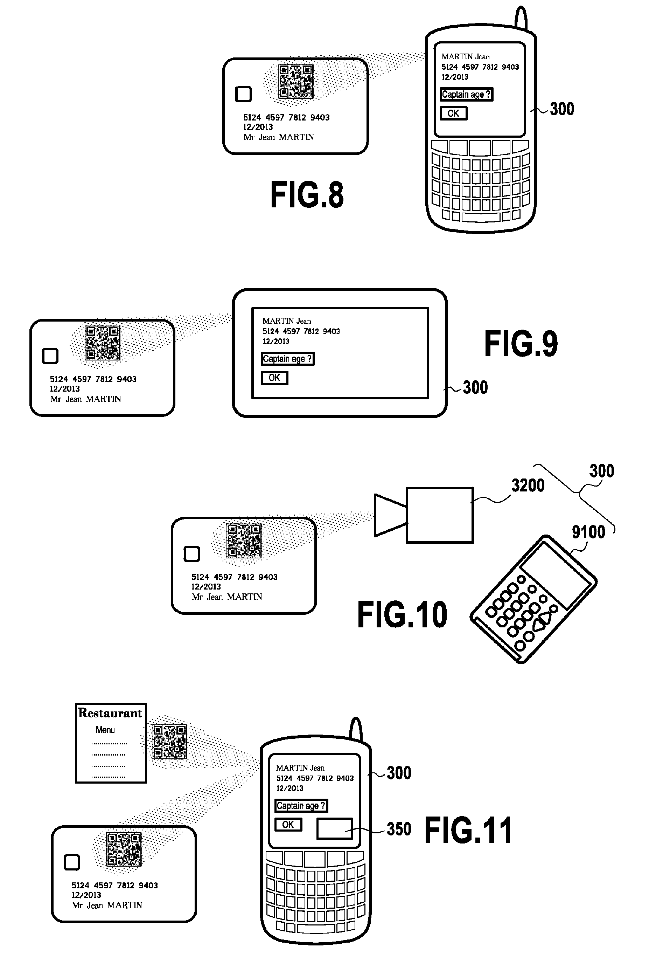

Le processus selon ce mode de réalisation est représenté en **figure 7****,** du point de vue de l'utilisateur. Dans ce processus, il est tout d'abord procédé à la détermination de la transaction au cours d'une étape 700, utilisant le terminal de lecture 300. Cette détermination peut être faite par la sélection et la validation d'un achat en ligne sur Internet (utilisation présentée en figures 8 et 9), ou l'utilisation d'une application dédiée à des achats dans un magasin (supermarché ou réseau de magasins équipés de codes lisibles par caméra, comme cela est présenté en figure 11), ou par un commerçant disposant d'un terminal de paiement (utilisation présentée en figure 10). Les informations obtenues sont mémorisées dans une mémoire de l'unité de contrôle 305.

Le détenteur de la carte bancaire 100 scanne alors le code-barres 120 avec la caméra 302 au cours d'une étape 710. L'unité de contrôle 305 extrait alors le code 121 du cadre 210 et celui-ci est affiché sur l'écran 200 en utilisant pour certains champs pré-remplis les informations fixées lors de l'étape de détermination de la transaction 700, récupérées dans la mémoire du terminal de lecture de lecture 300.

Un contrôle local de l'identité de l'utilisateur est de plus mis en oeuvre via une applet dans un élément de sécurité (« *secure element* »). Cela constitue une étape 720, au cours de laquelle l'utilisateur est invité à entrer son mot de passe dans la boîte de saisie 230. L'utilisateur donne ensuite son accord à la transaction en utilisant le bouton « OK », après avoir vérifié les informations pré-remplies 220. Le mot de passe entré dans la boîte de saisie 230 est comparé à celui contenu dans les informations cryptées 123.

A la place de la vérification d'un mot de passe d'autres solutions sécurisées peuvent être mises en oeuvre, comme une vérification de données biométriques, d'un code PIN, ou une liste de choix proposée sur une interface homme-machine, ces informations étant présentes dans l'ensemble d'informations cryptées 123.

Le contrôle peut aussi être effectué de manière distante par le serveur 320, disposant du mot de passe de référence 325. Dans ce cas, la sollicitation 410 comprend le transfert du mot de passe tapé par l'utilisateur dans la boîte de dialogue.

En figure 7, la branche de gauche correspond ensuite à un scénario sans mise en oeuvre de l'opération de vérification particulière, et celle de droite à un scénario avec l'opération de vérification particulière. Les étapes supplémentaires dans cette branche sont celles présentées en pointillés sur la figure 5.

Il est procédé à un test 730 pour déterminer si le montant de la transaction excède le niveau d'autorisation 1. Ce test est mis en oeuvre soit par l'unité de contrôle 305 (auquel cas le résultat du test est inclus dans la sollicitation 410) ou par le serveur 320 (auquel cas le serveur 320 mémorise préalablement le niveau d'autorisation associé à chaque carte 100). Si le montant de la transaction excède le niveau d'autorisation 1, l'étape 420 d'envoi d'un message à la messagerie du titulaire est mise en oeuvre par le serveur 320. L'utilisateur consulte alors sa messagerie 500 au cours d'une étape 740, y découvre le jeton et recopie celui-ci dans le terminal de lecture 300 à l'aide du clavier 280, au cours d'une étape 750.

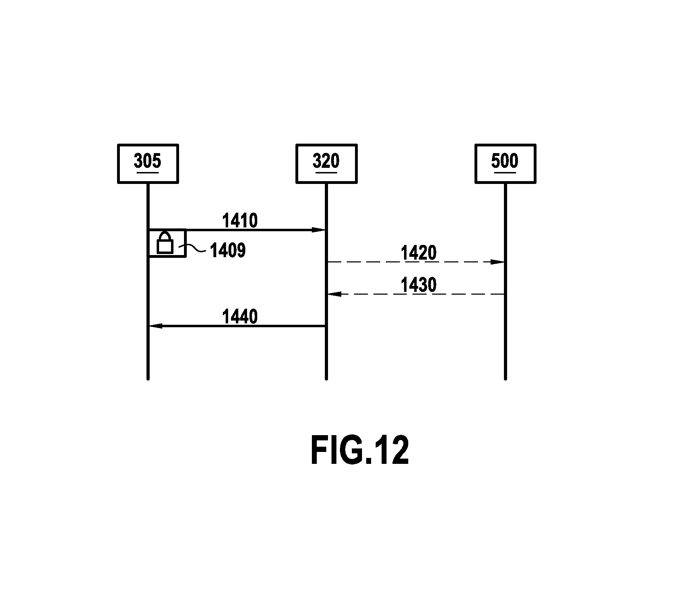

Dans une variante représentée en **figure 12**, l'unité de contrôle 305 effectue, à l'aide de moyens cryptographiques présents dans la carte SIM 309, une étape de signature 1409 d'une sollicitation 1410 qui est envoyée au serveur 320, la sollicitation comprenant le montant de la transaction.

Le serveur vérifie l'authenticité de la signature. Ensuite, si le montant de la transaction excède le montant maximum de transaction ne nécessitant pas une opération de vérification particulière (niveau d'autorisation 1), le serveur 320 envoie un message 1420 à la messagerie du titulaire de la carte 100 (dont l'adresse 327 est connue du serveur), demandant une confirmation. Ce message comprend au moins une caractéristique de la transaction envisagée, et de préférence, comprend la nature du bien ou service acheté, la quantité, le prix unitaire et le prix total.

Le titulaire de la messagerie y répond en saisissant son mot de passe ou un code de réponse préalablement convenu et en adressant par le service de messagerie une réponse 1430 incluant le mot de passe ou le code, ainsi que les caractéristiques de la transaction, reprises du le message précédent. Cette réponse constitue un bon de commande signé (« *Purchase order* »). Si la signature du bon de commande (ici, le mot de passe) est authentifiée par le serveur 320, celui-ci réagit par l'envoi d'un message 1440 d'acceptation de la réponse à destination de l'unité de contrôle 305.

Si le montant de la transaction n'excède pas le niveau d'autorisation 1, le serveur 320 émet d'emblée le message 1140 d'acceptation.

En **figures 8 à 11**, on a représenté des modes d'utilisation de l'invention.

Un premier mode d'utilisation est un achat à l'aide d'un téléphone mobile disposant d'une caméra et relié à Internet, constituant le terminal de lecture 300. Cela est représenté en figure 8, où l'utilisateur du téléphone scanne avec la caméra le code-barres de la carte 100. Un mot de passe lui est alors demandé dans la boîte de saisie 230 du cadre 210. Si le mot de passe est entré correctement par l'utilisateur et que le montant de la transaction est inférieur au niveau d'autorisation 1, la transaction est finalisée sur cette base, sans autre vérification.

Un deuxième mode d'utilisation est un achat à l'aide d'un terminal fixe (typiquement un ordinateur), ou une tablette tactile, constituant le terminal de lecture 300 (représentée en figure 9) disposant d'une webcam et d'un accès à Internet. Dans ce mode de réalisation, le terminal de lecture 300 n'inclut pas de carte SIM 309, et la sollicitation 410 ou 1410 n'est pas signée.

Un troisième mode d'utilisation, représenté en figure 10, est un achat dans un point de vente disposant d'un terminal conventionnel de paiement pour cartes bancaires à microcircuit et fonctionnant par contact. Un tel terminal inclut un ensemble clavier et écran 9100 adapté pour saisir un code PIN. Il y est ajouté, selon l'invention, une caméra 9200 pour scanner le code-barres. L'ensemble du terminal conventionnel et de la caméra, ainsi que de l'application logicielle adéquate constitue le terminal de lecture 300. Dans ce mode d'utilisation, la fonction du terminal conventionnel 9100 de lecture par contact du microcircuit n'est pas utilisée.

Un quatrième mode d'utilisation, représenté en figure 11, est un achat dans un magasin ou un restaurant. Le vendeur (ici un restaurant) est identifié par un code-barres qui est scanné par la caméra d'un téléphone mobile constituant le terminal de lecture 300. Le téléphone mobile servant de terminal 300 est ensuite utilisé pour scanner le code-barres 120 de la carte 100. Une application 350 enregistrée dans le téléphone mobile permet de faire le lien entre les deux identifiants et d'organiser la transaction.

Dans un autre mode de réalisation, le code-barres 120 est présenté sur un écran à cristaux liquides inclus dans le corps de carte. Le code-barres peut être un code dynamique, généré suivant des règles logiques mises en oeuvre par un contrôleur compris dans la carte, et de préférence dans un circuit sécurisé de la carte, tel que le microcircuit 110. Le code-barres représente alors des mots de passe à usage unique, délivré à chaque tentative de transaction. Le serveur 320 vérifie le mot de passe soit en le vérifiant sur la base de données transmises, soit sur la base d'une liste préenregistrée. Le code dynamique peut être généré à partir du compteur de transaction 308.

L'invention ne se limite pas aux modes particuliers de réalisation présentés, mais s'étend à toutes les variantes dans le cadre de la portée des revendications.

## Revendications

1. Carte bancaire (100) comportant une surface de présentation d'un pictogramme (120) codant au moins une information (121, 122, 123) pour la réalisation d'une transaction.

2. Carte bancaire (100) selon la revendication précédente, dans laquelle la au moins une information est un numéro de la carte, une date de validité de la carte, un nom ou prénom d'un titulaire de la carte, un identifiant de catégorie d'un émetteur de la carte, un identifiant d'un émetteur de la carte, un code de sécurité de la carte, ou un mot de passe à usage unique.

3. Carte bancaire (100) selon l'une des revendications précédentes, dans laquelle le pictogramme est un code-barres, par exemple un code 2D, par exemple un code QR.

4. Carte bancaire (100) selon la revendication précédente, dans laquelle le pictogramme est un pictogramme dynamique.

5. Carte bancaire (100) selon l'une des revendications précédentes, dans laquelle la carte comprend un contrôleur pour générer un pictogramme à usage unique pour une transaction.

6. Carte bancaire (100) selon l'une des revendications précédentes, dans laquelle la surface est un écran LCD, ou une couche de matière synthétique imprimée ou gravée, incluse dans le corps de carte ou rapportée par exemple par collage.

7. Carte bancaire (100) selon l'une des revendications précédentes, dans laquelle le pictogramme code une adresse (122) d'un serveur de transaction (320).

8. Procédé de réponse à une demande de transaction comprenant des étapes consistant à recevoir une demande de transaction comprenant un pictogramme (120) codant au moins une information (121, 122, 123) pour la réalisation d'une transaction et une information complémentaire (230), extraire du pictogramme ladite information pour la réalisation d'une transaction, et en fonction de ladite information pour la réalisation d'une transaction et de l'information complémentaire, ainsi que de règles d'autorisation prédéfinies, émettre une autorisation ou un refus en réponse à la demande de transaction.

9. Procédé de réponse selon la revendication précédente, dans lequel le procédé est au moins partiellement mis en oeuvre par un serveur (320) relié à un réseau de télécommunications étendu (310).

10. Procédé de réponse selon l'une des revendications de procédé précédentes, dans lequel le procédé est au moins partiellement mis en oeuvre par un terminal de paiement (300) disposant d'un clavier (280) et d'une caméra (302).

11. Procédé de réponse selon l'une des revendications de procédé précédentes, dans lequel le procédé est au moins partiellement mis en oeuvre par une entité électronique portable (fig 8) disposant d'un clavier et d'une caméra.

12. Procédé de réponse selon l'une des revendications de procédé précédentes, dans lequel le procédé comprend de plus l'affichage sur un écran d'une boîte d'entrée (230) pour une chaîne alphanumérique constituant l'information complémentaire.

13. Procédé de réponse selon l'une des revendications de procédé précédentes, dans lequel les règles d'autorisation prédéfinies comprennent une règle selon laquelle l'autorisation est donnée en fonction d'un résultat d'un test de comparaison appliqué à l'information complémentaire.

14. Procédé de réponse selon l'une des revendications de procédé précédentes, dans lequel le procédé comprend l'envoi d'un message (420) à destination d'une messagerie (500) d'un titulaire d'un moyen de paiement comprenant un élément d'identification à usage unique, puis la réception (440) d'un élément d'identification fourni par un demandeur de la demande de transaction et la comparaison de l'élément d'identification à usage unique et de l'élément d'identification fourni.

15. Procédé de réponse selon l'une des revendications de procédé précédentes, dans lequel le procédé comprend l'envoi d'au moins une caractéristique de la transaction (1420) à destination d'une messagerie (500) d'un titulaire d'un moyen de paiement, puis la réception (1430) d'un bon de commande signé par un demandeur de la demande de transaction et l'authentification d'une signature du bon de commande.

16. Procédé de réponse selon l'une des revendications de procédé précédentes, dans lequel ladite information est un mot de passe à usage unique.
